# EUROPEAN PATENT SPECIFICATION

(11) **EP 3 925 825 B1**
(45) Date of publication and mention of the grant of the patent: **26.11.2025**
(21) Application number: 21305820.9
(22) Date of filing: 16.06.2021
(51) Int. Cl.: B60N 3/06

(54) **VEHICLE FOR PUBLIC TRANSPORT COMPRISING A HEALTH SYSTEM FOR PASSENGERS**
FAHRZEUG FÜR ÖFFENTLICHES VERKEHRSMITTEL MIT EINEM GESUNDHEITSSYSTEM FÜR PASSAGIERE
VÉHICULE POUR LE TRANSPORT PUBLIC COMPRENANT UN SYSTÈME DE SANTÉ POUR LES PASSAGERS

(30) Priority: 16.06.2020 IT 202000014359
(43) Date of publication of application: 22.12.2021
(73) Proprietor: IVECO FRANCE S.A.S., 69200 Vénissieux (FR)
(72) Inventor: CODRON, Stephane, 69008 Lyon (FR)
(74) Representative: Studio Torta S.p.A.

(56) References cited:
- CN-A- 104 057 860
- DE-A1- 102014 222 352
- DE-A1- 102017 223 085
- US-A- 3 860 284
- US-A- 4 955 658

## Description

### TECHNICAL FIELD

The present invention relates to a vehicle, in particular a health system for a road vehicle intended for the public transport of passengers.

### STATE OF THE ART

Vehicles for the public transport of passengers, such as wheeled vehicles, for example coaches, are often used by passengers for long journeys that involve many hours of travel.

During these long journeys, passengers sit continuously in their seats in a fixed position. This position is particularly uncomfortable for tall people. In addition, this fixed position increases the risk of phlebitis and embolism, especially for the elderly.

Indeed, it is known that keeping the legs in a sitting position for too long damages the circulatory system by increasing the pressure in the venous return flow in the legs, normally helped by muscular movement of the legs.

One solution to this problem could be to provide ample space in the vehicle for passengers to move around while the vehicle is in motion. However, this movement is obviously dangerous if the vehicle brakes suddenly. In fact, in some countries, it is forbidden to have standing passengers during journeys on tourist coaches.

In addition, these large spaces would take away space for seats, reducing the number of passengers that could normally be carried.

An example of a known solution aimed to improve the health of seated passengers in the confined spaces of public passenger transport vehicles is disclosed in DE102017223085 A1 which discloses a vehicle according to the preamble of claim 1.

Therefore, there is a need to improve the health of seated passengers in the confined spaces of public passenger transport vehicles, such as coaches.

This invention aims to solve the above-mentioned drawbacks in a simple and economical way.

### SUMMARY OF THE INVENTION

The above-mentioned objectives are achieved by a road vehicle for the public transport of passengers comprising a health system according to the attached claims.

### BRIEF DESCRIPTION OF THE DRAWINGS

Other characteristics and benefits of the invention will become apparent from the following non-limiting description, provided for illustrative purposes, with reference to the attached drawings wherein:
- Figure 1 is a schematic lateral view of a public passenger transport vehicle comprising a health system according to the present invention;

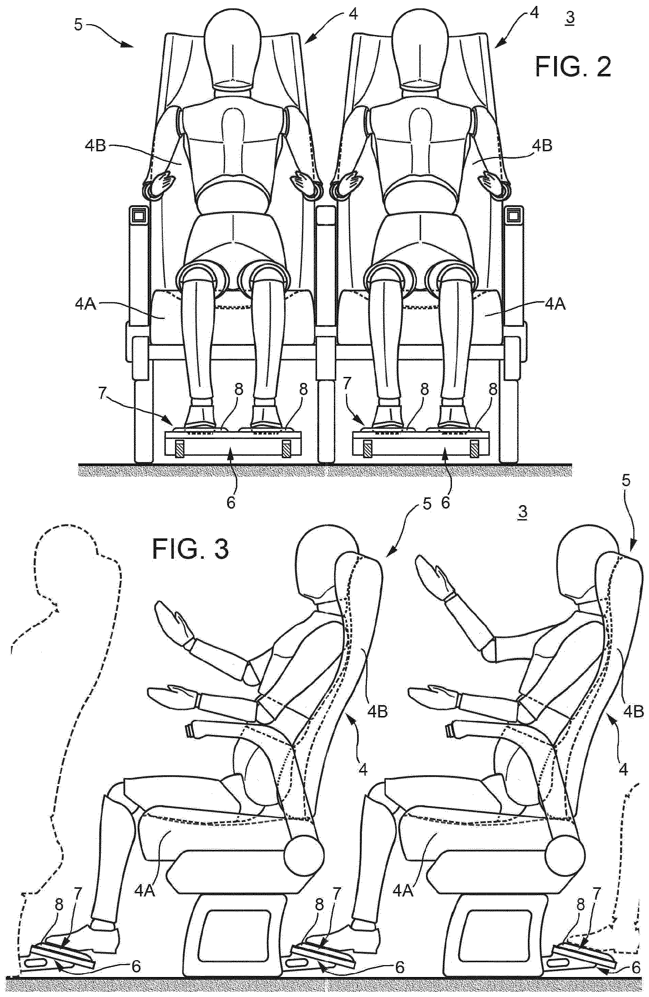

- Figure 2 is a schematic front view of an internal portion of the vehicle of Figure 1;
- Figure 3 is a schematic lateral view of an internal portion of the vehicle of Figure 1;
- Figures 4 to 7 are respective schematic front views of an internal portion of the vehicle of Figure 1 in different operating conditions of the health system according to the present invention;
- Figure 8 is a schematic lateral view of an internal portion of the vehicle of Figure 1 depicting an operating condition of the health system according to the present invention; and
- Figures 9 and 10 depict two different embodiments of the health system of the present invention.

### DETAILED DESCRIPTION OF THE INVENTION

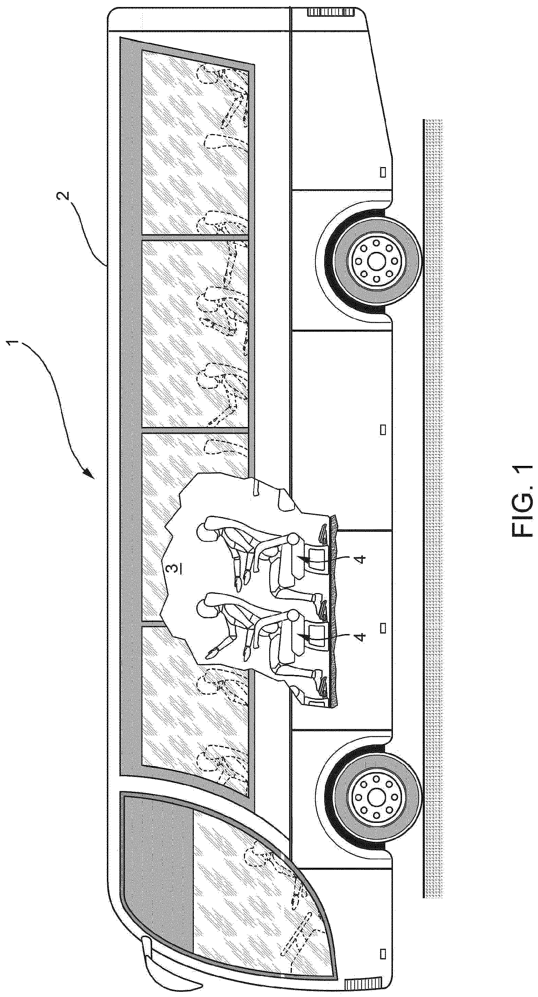

Figure 1 illustrates a vehicle 1 for the public transport of passengers comprising a plurality of walls 2 connected to each other to define an internal volume 3 within which passengers of the vehicle 1 can be accommodated. This internal volume 3 is equipped with several supports for passengers such as seats 4.

As known, these seats 4 are arranged next to each other in rows 5 spaced apart at a predetermined distance from each other which allows the passenger to enter the respective row 5 and sit on the selected seat 4.

Each seat 4 essentially comprises a support 4A and a column 4B configured to connect the support 4A to the floor of the vehicle 1. Beneficially, this column 4B may comprise a single support element or, as in the case described, a pair of support elements.

Preferably, each seat 4 may be equipped with a footrest 6 configured to allow a passenger seated on the seat 4 to rest their feet in an ergonomic position. As known, a footrest 6 is placed in front of each seat 4 and may be attached to the floor of the vehicle 1 or to the seat 4 of the row 5 in front of the one where the passenger is sitting. In the example described, the footrest 6 is borne by the preceding seat 4, in particular attached to its column 4B.

According to the invention, the vehicle 1 comprises a health system 7 for each seat 4 configured to allow movement of the legs of a passenger seated in a seat 4, in the space between two rows 5.

In particular, said health system 7 comprises an inflatable element 8 configured to dilate under the action of pressurized air so as to be deformable by the passenger under the action of a force imparted by the passenger's feet on the inflatable element 8.

Beneficially, said health system 7 is integrated into the footrest 6 and is beneficially housed on its upper surface, i.e. the support surface for the passenger's feet.

The inflatable element 8 essentially comprises an element of elastic material, for example rubber, of sufficient thickness to withstand the pressure imparted by the passenger's feet and to not be damaged as a result of contact with the passenger's shoes. This inflatable element 8 defines an enclosed space configured to selectively receive compressed air so as to inflate and deflate by occupying, or not occupying, a portion of space within the inside 3 of the vehicle 1.

The health system 7 further comprises a pneumatic system 9 configured to selectively inflate and deflate the inflatable element 8. Beneficially, this pneumatic system 9 is thus configured to fluidly connect the inflatable element 8 to a source 10 of pressurized air such as a dedicated air pump or a compressed air reservoir shared with other systems of the vehicle 1.

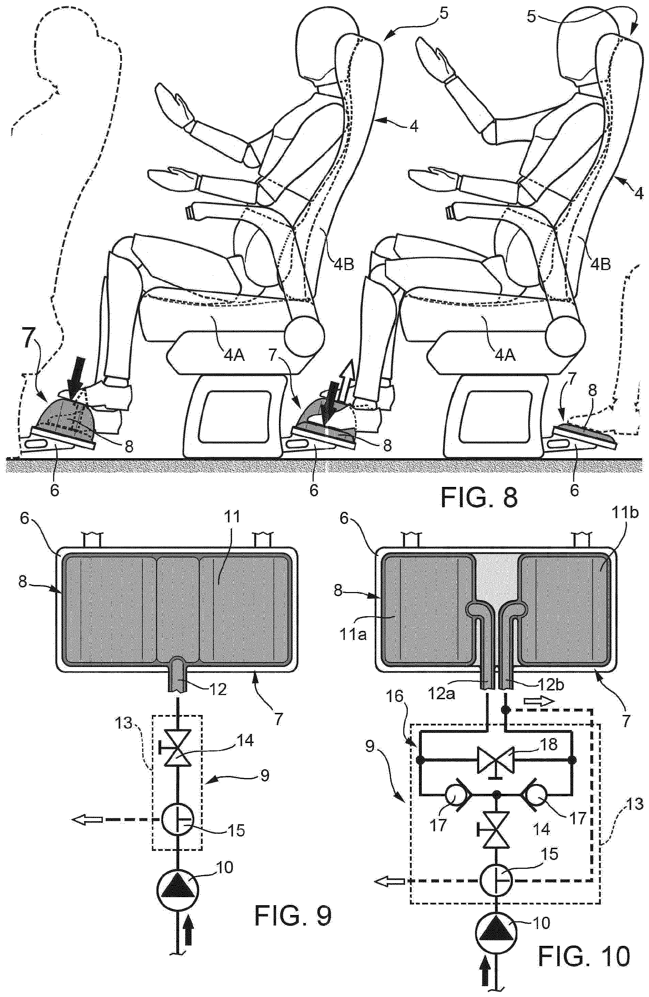

Figure 9 illustrates a first embodiment of the health system 7 according to the present invention wherein the inflatable element 8 comprises a single inflatable cushion 11 housed on the contact surface of the footrest 6 and connected to the pneumatic system by means of a duct 12.

In this embodiment, the pneumatic system 9 beneficially comprises valve means 13 configured to regulate fluid communication between the source 10 and the external environment so as to allow inflation and deflation of the cushion 11.

Beneficially, said valve means 13 may essentially comprise a pressure relief valve 14 in fluid series with a control valve 15, beneficially a three-way two-position valve, configured to define a first position wherein it allows fluid communication between the source 10 of pressurized air and the cushion 11 and a second position wherein it allows fluid communication between the cushion 11 and the environment.

Figure 10 illustrates a second embodiment of the health system 7 according to the present invention wherein the inflatable element 8 comprises a pair of inflatable cushions 11a, 11b fluidly separated from each other and connected by respective ducts 12a, 12b to the pneumatic system 9.

The two inflatable cushions 11a, 11b are beneficially accommodated on the contact surface of the footrest 6 at two laterally opposite ends thereof, i.e. on the right and left sides of the footrest 6.

In this embodiment, the pneumatic system 9 beneficially comprises valve means 13 configured to regulate fluid communication between the source 10 and the external environment so as to allow independent inflation and deflation of each of the cushions 11a, 11b.

Beneficially, these valve means 13 may essentially comprise a relief valve 14 fluidly in series with a control valve 15, connected together as described above. Furthermore, in this embodiment, the pneumatic system 9 further comprises pressure balancing means 16 to allow controlled fluid communication between the ducts 12a, 12b.

Said pressure balancing means 16 essentially comprise non-return valves 17 respectively fluidly interposed in the ducts 12a, 12b between the cushions 11a, 11b and the pressure relief valve 14 as well as an equalizing valve 18 fluidly interposed in parallel between each duct 12a, 12b, between the cushions 11a, 11b and each non-return valve 17.

In this case the control valve 15 is a four-way two-position valve, configured to define a first position in which it allows fluid communication between the source 10 of pressurized air and the cushion 11 via the pressure relief valve 14 and a second position wherein it allows direct fluid communication between the cushion 11a, 11b and the environment.

The health system 7 may also comprise a control device (not shown) configured to control the operation of the pneumatic system 9, i.e. the actuation of the valves described below. This control device may be a remote control, a button, or an application that may be installed on a device in the vehicle 1 or on a passenger's smartphone.

The operation of the health system 7 according to the present invention is as follows.

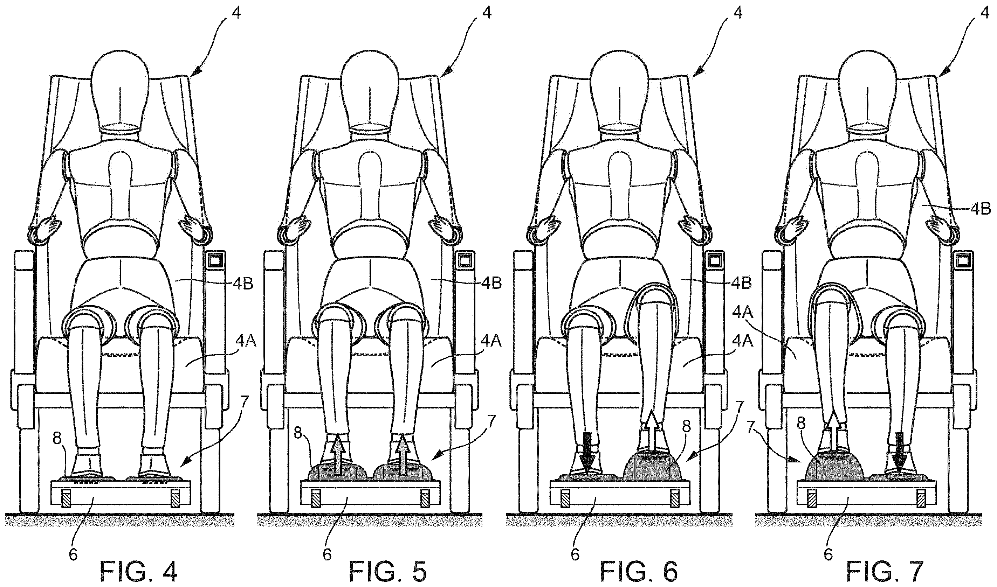

In general, when the user wishes to activate the health system 7, the user can activate the health system 7 using the control device. Thus, the passenger allows the inflatable element 8 to be inflated so that the user can "walk" on it, as shown in Figures 4 to 8, alternately with their right and left leg. In this way, it is possible to move the legs by simulating a kind of "walk", activating the muscles that may facilitate venous return.

When the user wishes, the user can deactivate the health system 7 allowing it to deflate and the inflatable element 8 returns to its position on the surface where it is housed, on the footrest 6 in the case described.

In the embodiment shown in Figure 9, the control device controls the valve means 13 so as to allow the injection of air into the inflatable element 8, allowing air to pass from the source 10 to the pressure relief valve 14 via the control valve 15. When the inflatable element 8 is to be deflated, the control valve 15 is therefore commanded to fluidly connect the inflatable element 8 with the environment.

In the embodiment of Figure 10, the operation of the pneumatic system 9 is the same as in the embodiment of Figure 9 described above except for the presence of the pressure balancing means 16. In effect, the non-return valves 17 allow passage of air solely in the fluid direction from the source 10 towards the cushions 11a, 11b. Thus, when the control valve 15 prevents direct connection to the environment, the non-return valves 17 do not allow air to flow back towards the valve 15. In this case, fluid communication is allowed between the cushions 11a, 11b, damped by the valve 18, so that it is possible to allow the passage of air between one cushion 11a, 11b and the other depending on the action of passengers on the cushions.

From the foregoing, the benefits of a road vehicle comprising a health system according to the present invention are apparent.

Thanks to the health system 7, it is possible to provide a system that allows movement of the legs of the passengers sitting in the seats 4.

In particular, integration of the former in the footrest 6, and its activation on a passenger's command, renders it particularly compact, not taking up any additional space between the rows 5 of the vehicle 1.

In addition, it makes the footrest 6 particularly versatile since it can be used both as a known footrest, but also as a solution to improve blood circulation.

Furthermore, the possibility of providing a single inflatable element comprising one or more inflatable elements allows for different types of health systems 7 to be installed depending on the size and type of vehicle 1.

Finally, it is apparent that the road vehicle comprising a health system according to the present invention may be subject to modifications and variations without thereby departing from the protective scope of the claims.

In particular, as mentioned, the health system 7 may be attached to the footrest 6 or equally to the floor of the vehicle 1.

Furthermore, it is clear that the pneumatic system 9 may be of any type and comprise other elements than those described.

In addition, the inflatable element 8 may comprise more inflatable cushions 11, of different shapes and materials to those described.

## Claims

1. A road vehicle (1) comprising a plurality of walls (2) which delimit an interior space (3) suitable for transporting passengers, said vehicle (1) comprising a plurality of seats (4) configured to define a support (4A) suitable to accommodate a passenger of said vehicle (1), said vehicle (1) comprising a health system (7) for each seat (4), said health system (7) being fixed to said vehicle (1) in front of the respective seat (4) , said road vehicle (1) comprising an inflatable element (8) configured to adopt a first configuration wherein it does not occupy space on the inside (3) of said vehicle (1) and a second configuration wherein it is inflated to occupy a space on the inside (3) of said vehicle (1) and a pneumatic system (9) configured to introduce compressed air into said inflatable element (8) or to allow the escape of said compressed air from said inflatable element (8), said inflatable element (8) comprising at least two cushions (11a, 11b)able to be compressed by said passenger when they are in said second configuration so as to allow movement of their legs,
**characterized in that** said pneumatic system (9) further comprises balancing means (16) fluidly interposed between said at least two cushions (11a, 11b) to allow fluid communication between them.

2. The vehicle (1) according to claim 1, wherein said inflatable element (8) is fixed to a floor of said vehicle (1).

3. The vehicle according to claim 1 comprising a footrest (6) fixed to said vehicle (1) and placed in front of said seat (4), said inflatable element (8) being fixed to an upper contact part of said footrest (6).

4. The vehicle according to any of the preceding claims, wherein said pneumatic system (9) comprises a source (10) of pressurized fluid and valve means (13) fluidly interposed between said source (10) and said inflatable element (8) configured to regulate its inflation and deflation.

5. The vehicle according to one of the preceding claims, wherein said inflatable element (8) is made of elastic material so as to adhere to the respective support when it is in the first configuration.

6. The vehicle according to one of the preceding claims, comprising a control device configured to control the passage of compressed air in said inflatable element to allow passage between the first and the second configuration.

## Patentansprüche

1. Straßenfahrzeug (1), umfassend eine Vielzahl von Wänden (2), die einen Innenraum (3) begrenzen, der zum Transport von Passagieren geeignet ist, wobei das Fahrzeug (1) eine Vielzahl von Sitzen (4) umfasst, die konfiguriert sind, um eine Stütze (4A) zu definieren, die geeignet ist, um einen Passagier des Fahrzeugs (1) aufzunehmen, wobei das Fahrzeug (1) ein Gesundheitssystem (7) für jeden Sitz (4) umfasst, wobei das Gesundheitssystem (7) an dem Fahrzeug (1) vor dem jeweiligen Sitz (4) befestigt ist, wobei das Straßenfahrzeug (1) ein aufblasbares Element (8) umfasst, das konfiguriert ist, um eine erste Konfiguration einzunehmen, in der es keinen Raum auf der Innenseite (3) des Fahrzeugs (1) einnimmt, und eine zweite Konfiguration, in der es aufgeblasen ist, um einen Raum auf der Innenseite (3) des Fahrzeugs (1) einzunehmen, und ein pneumatisches System (9), das konfiguriert ist, Druckluft in das aufblasbare Element (8) einzuführen oder um das Entweichen der Druckluft aus dem aufblasbaren Element (8) zu ermöglichen, wobei das aufblasbare Element (8) mindestens zwei Kissen (11a, 11b) umfasst, die von dem Passagier zusammengedrückt werden können, wenn sie sich in der zweiten Konfiguration befinden, um eine Bewegung ihrer Beine zu ermöglichen, **dadurch gekennzeichnet, dass** das pneumatische System (9) ferner Ausgleichsmittel (16) umfasst, die fluidisch zwischen den mindestens zwei Kissen (11a, 11b) angeordnet sind, um eine Fluidverbindung zwischen ihnen zu ermöglichen.

2. Fahrzeug (1) nach Anspruch 1, wobei das aufblasbare Element (8) an einem Boden des Fahrzeugs (1) befestigt ist.

3. Fahrzeug nach Anspruch 1, umfassend eine Fußstütze (6), die an dem Fahrzeug (1) befestigt und vor dem Sitz (4) platziert ist, wobei das aufblasbare Element (8) an einem oberen Kontaktteil der Fußstütze (6) befestigt ist.

4. Fahrzeug nach einem der vorhergehenden Ansprüche, wobei das pneumatische System (9) eine Quelle (10) von unter Druck stehendem Fluid und Ventilmittel (13) umfasst, die fluidisch zwischen der Quelle (10) und dem aufblasbaren Element (8) angeordnet sind, die konfiguriert sind, dessen Aufblasen und Entleeren zu regulieren.

5. Fahrzeug nach einem der vorhergehenden Ansprüche, wobei das aufblasbare Element (8) aus elastischem Material hergestellt ist, um an der jeweiligen Stütze zu haften, wenn es sich in der ersten Konfiguration befindet.

6. Fahrzeug nach einem der vorhergehenden Ansprüche, umfassend eine Steuervorrichtung, die konfiguriert ist, um den Durchgang von Druckluft in dem aufblasbaren Element zu steuern, um einen Durchgang zwischen der ersten und der zweiten Konfiguration zu ermöglichen.

## Revendications

1. Véhicule (1) routier comprenant une pluralité de parois (2) qui délimitent un espace intérieur (3) apte au transport de passagers, ledit véhicule (1) comprenant une pluralité de sièges (4) configurés pour définir un support (4A) apte à accueillir un passager dudit véhicule (1), ledit véhicule (1) comprenant un système de santé (7) pour chaque siège (4), ledit système de santé (7) étant fixé audit véhicule (1) devant le siège (4) respectif, ledit véhicule (1) routier comprenant un élément gonflable (8) configuré pour adopter une première configuration dans laquelle il n'occupe pas d'espace dans l'intérieur (3) dudit véhicule (1) et une deuxième configuration dans laquelle il est gonflé pour occuper un espace dans l'intérieur (3) dudit véhicule (1) et un système pneumatique (9) configuré pour introduire de l'air comprimé dans ledit élément gonflable (8) ou pour permettre l'échappement dudit air comprimé dudit élément gonflable (8), ledit élément gonflable (8) comprenant au moins deux coussins (11a, 11b) pouvant être comprimés par ledit passager lorsqu'ils sont dans ladite deuxième configuration de façon à permettre un mouvement de leurs jambes, **caractérisé en ce que**
ledit système pneumatique (9) comprend en outre des moyens d'équilibrage (16) fluidiquement interposés entre lesdits au moins deux coussins (11a, 11b) pour permettre une communication fluidique entre eux.

2. Véhicule (1) selon la revendication 1, dans lequel ledit élément gonflable (8) est fixé à un plancher dudit véhicule (1).

3. Véhicule selon la revendication 1 comprenant un repose-pieds (6) fixé audit véhicule (1) et placé devant ledit siège (4), ledit élément gonflable (8) étant fixé à une partie de contact supérieure dudit repose-pieds (6).

4. Véhicule selon l'une quelconque des revendications précédentes, dans lequel ledit système pneumatique (9) comprend une source (10) de fluide sous pression et des moyens de vanne (13) fluidiquement interposés entre ladite source (10) et ledit élément gonflable (8) configurés pour réguler son gonflage et son dégonflage.

5. Véhicule selon l'une des revendications précédentes, dans lequel ledit élément gonflable (8) est réalisé en matériau élastique de façon à adhérer au support respectif lorsqu'il est dans la première configuration.

6. Véhicule selon l'une des revendications précédentes, comprenant un dispositif de contrôle configuré pour contrôler le passage d'air comprimé dans ledit élément gonflable pour permettre un passage entre la première et la deuxième configuration.
